# EUROPÄISCHE PATENTANMELDUNG

(11) **EP 4 671 548 A1**
(43) Veröffentlichungstag der Anmeldung: **31.12.2025**
(21) Anmeldenummer: 24185336.5
(22) Anmeldetag: 28.06.2024
(51) Int. Cl.: F16B 5/02

(54) **FÜHREINSATZ FÜR EINEN BOLZEN**

(71) Anmelder: ALPAKA GmbH & Co. KG, 36100 Petersberg (DE)
(72) Erfinder: Hartmann, Frank, 36100 Petersberg (DE)
(74) Vertreter: Borbach, Markus

(57) **Zusammenfassung**

Die vorliegende Erfindung betrifft einen Führeinsatz (10) für einen Bolzen, welcher eine Führhülse (12) mit einer Führöffnung (14), die den Bolzen aufnehmen kann, und eine Stützscheibe (16), die ihrerseits eine Stützöffnung (26) umfasst, die die Führhülse (12) aufnehmen kann, umfasst, wobei die Führhülse (12) eine Außenwand (24) aufweist, und die Stützöffnung (26) eine Innenwand (28) aufweist, wobei die Führhülse (12) bezogen auf die Außenwand (24) einen Flächenschwerpunkt hat, dadurch gekennzeichnet, dass das Zentrum der Führöffnung (14) gegenüber diesem Flächenschwerpunkt verschoben ist und die Außenwand (24) der Führhülse (12) in verschiedenen Positionen in die Stützöffnung (26) eingesetzt werden kann. Die Erfindung betrifft auch ein Verfahren zur Führung eines Bolzens.

## Beschreibung

### Gebiet der Erfindung

Die vorliegende Erfindung betrifft einen Führeinsatz, der einen Bolzen in einer Aufnahmeöffnung führt. Ein solcher Führeinsatz kann beispielsweise zum Führen von Bolzen eingesetzt werden, welche einen Träger mit einem Fundament verbinden und in einer Aufnahmeöffnung des Fundaments geführt werden sollen.

### Hintergrund der Erfindung

Die französische Offenlegungsschrift FR 2744501 A1 offenbart eine Führung, die eine Zentrierscheibe mit einem Langloch umfasst. Durch dieses Langloch kann ein Bolzen in verschiedenen Positionen geführt werden. Um die Position des Bolzens im Langloch näher festzulegen, dient eine Art Unterlegscheibe. Diese Unterlegscheibe ist auf der Seite, die der Zentrierscheibe zugewandt ist, mit Rillen versehen. Die Zentrierscheibe selbst bietet spiegelbildlich dazu Rillen an. Durch die Rillen ist eine Fixierung der Unterlegscheibe in dem Langloch möglich.

Dieser Ansatz betrifft das grundsätzliche Problem, dass ein Langloch in der Längsrichtung des Loches Spiel anbietet, dies aber eingeschränkt werden soll, wenn ein Bolzen festgezogen ist. Jedoch ist die Unterlegscheibe selbst ein kleines Bauteil, das nicht sehr viel Halt für den Bolzen anbieten kann. Ferner sind ineinandergreifende Rillen auch keine ganz zuverlässige Art der Fixierung. Regelmäßig muss man mit etwas Spiel des Bolzens oder einer daran befestigten Mutter rechnen. Durch dieses Spiel wird die Unterlegscheibe nicht mehr so fest in die korrespondierenden Rillen der Zentrierscheibe gepresst. Dadurch kann die Seitenführung innerhalb des Langloches ganz mangelhaft sein.

Die vorliegende Erfindung möchte eine Führungseinrichtung anbieten, welche auch bei hohen Lasten und eventuell bei einem nicht-idealen Sitz des Bolzens sehr zuverlässig arbeitet.

Diese Aufgabe wird durch einen Führeinsatz nach Anspruch 1 gelöst. Vorteilhafter Weiterbildungen sind in den Unteransprüchen angegeben. Die entsprechenden Vorteile weist auch die Verfahren nach Ansprüchen 10 bis 14 auf.

### Nähere Beschreibung

Die vorliegende Erfindung betrifft einen Führeinsatz für einen Bolzen. Der Begriff Bolzen steht hier allgemein für ein Verbindungselement länglicher Form, es kann sich beispielsweise auch um eine Schraube handeln. Es kann sich auch noch allgemeiner um ein Langstück handeln, wie etwa ein Rohr oder ein Rundstück. Der Führeinsatz soll den Bolzen in mindestens einer Richtung gegenüber einer Aufnahmeöffnung abstützen. Der Führeinsatz könnte mit einem passenden Bolzen geliefert werden, der Bolzen ist aber nicht Teil der Erfindung.

Der Bolzen wie auch der Führeinsatz sollen zumindest teilweise in eine Aufnahme eintauchen. Eine solche Aufnahme wird typischerweise durch eine Aufnahmeöffnung, in der Regel auch eine Aufnahmeöffnung runden Querschnitts zur Verfügung gestellt. Bei einer typischen Anwendung des erfindungsgemäßen Führeinsatzes ist die Aufnahmeöffnung in einem Fundament vorgesehen.

Die erfindungsgemäßen Führeinsätze können verschiedene Verwendungen sowohl im Hochbau als auch im Tiefbau finden. Typischerweise werden sie im Tiefbau eingesetzt oder genauer im Übergang zum Tiefbau zum Hochbau, nämlich im Sockelbereich von Hochbaueinrichtungen.

Dabei kommt insbesondere die Verankerung von Stahlstützen infrage. Solche Stahlstützen können für Masten und Säulen eingesetzt werden, beispielsweise Masten für Windkraftanlagen oder auch Strommasten. In Betracht kommt auch die Verwendung für Stahlstützen im Hallenbau. Die Stützen (nachfolgend allgemein auch für Masten und Säulen verwendet) sollen im Bodenbereich typischerweise mit Flanschen verankert werden.

Flansche können ringförmig die entsprechende Stütze umgeben, sie können auch als Fußplatten ausgeführt sein. Ein Flansch bietet typischerweise eine Vielzahl von Bohrungen an, durch die Bolzen geführt und verankert werden können. In vielen Fällen sind die Bohrungen im Flansch genau vorgegeben. Die Verankerung geschieht häufig in Fundamenten, wo die genaue Positionierung von Bolzen schwierig ist. Daher ist es häufig zweckmäßig, die Aufnahmeöffnung für einen Bolzen im Fundament so zu gestalten, dass der Bolzen in leicht verschiedenen Positionen oder leicht verschiedenen Orientierungen aufgenommen werden kann.

Bei den beschriebenen Anwendungen wirken erkennbar sehr hohe Kräfte auf die Bolzen. Es ist daher wichtig, dass die Bolzen nach Abschluss der Montage möglichst wenig Spiel haben. Diesem Zweck dient der erfindungsgemäße Führeinsatz. Die genaue Ausrichtung der Bolzen dagegen verlangt etwas Spiel, insbesondere können Betonfundamente in der Regel nicht so genau gefertigt werden, dass eine spielfreie Montage der Bolzen möglich wäre. Häufig ist es so, dass nicht nur die Betonfundamente selbst, sondern auch die Aufnahmeöffnungen in einem Prozess gegossen werden. Das Gießen von Beton ist aber kaum millimetergenau möglich.

Zweckmäßig ist es daher, die Aufnahmeöffnung etwas größer zu gestalten als den Bolzen. Dann ist es möglich, den Bolzen entweder leicht schräg, also in einem Winkel zur Längsachse einer Aufnahmeöffnung zu führen, oder auch parallel zur Längsachse der Aufnahmeführung, aber in leicht versetzten Positionen. Diese Optionen können natürlich auch kombiniert werden.

Sobald der Bolzen zur Verankerung verwendet wird, wirken sehr hohe Kräfte auf ihn. Ungünstig wäre es daher, wenn das Bolzenende, insbesondere an der Oberkante der Aufnahmeöffnung (in der Regel ist das die Oberkante einer Fundamentplatte) weiterhin Spiel hat. Dies würde die erstrebenswerte und mögliche Festigkeit der Verbindung unterlaufen. Dort, wo solches Spiel entsteht, würde auch leicht mechanische Bewegung passieren, Bruchstellen des Bolzens entstehen lassen kann.

Als Lösung bietet die vorliegende Erfindung einen Führeinsatz an, der verschiedene Positionen des Bolzens in einer Aufnahmeöffnung ermöglicht, gleichzeitig aber den Bolzen stützt. Einzelne Ausführungsformen des Führeinsatzes stützen den Bolzen auch in einer Schrägstellung.

Im Hinblick auf die besonders hohen wirksamen Kräfte (insbesondere etwa bei der Verankerung einer Windkraftanlage) ist die sichere Stützung und Führung des Bolzens von allen Seiten erstrebenswert. Insbesondere soll durch gute Führung vermieden werden, dass der Bolzen auf Biegung beansprucht wird.

Der Führeinsatz soll eine Führhülse umfassen. Diese wiederum soll eine Führöffnung umfassen, die den Bolzen aufnehmen kann. Wenngleich die Führöffnung eine beliebige, an den Bolzen angepasste Form haben kann, wird die Führöffnung in der Regel rund sein.

Neben der Führhülse soll der Führeinsatz eine Stützscheibe umfassen. Diese Stützscheibe soll eine Stützöffnung umfassen, die die Führhülse aufnehmen kann. Die Stützscheibe umgibt die Führhülse also zu wesentlichen Teilen.

Genauer soll die Führhülse eine Außenwand aufweisen und die Stützöffnung soll eine Innenwand aufweisen. Die Führhülse soll dabei in verschiedenen Positionen in die Stützöffnung eingesetzt werden können. Dazu ist die Innenwand der Stützöffnung an die Außenwand der Führhülse anzupassen. Im einfachsten Fall ist die Außenwand der Führhülse rund und die Innenwand der Führhülse ist ebenfalls rund. Die beiden Wände können einander dann umschließen. Je nach Anwendung ist mehr oder weniger Spiel vorzusehen. In jedem Fall ergibt sich eine formschlüssige Verbindung.

Eine solche Verbindung kann auch für andere Formen der Außenwand der Führhülse hergestellt werden. Die Außenwand kann beispielsweise der Form eines Vielecks folgen. Hier kommt eine quadratische oder rechteckige Form in Betracht, vorgezogen wird ein Sechseck, Siebeneck, Achteck oder Zwölfeck und allgemeiner ein Vieleck mit n ≤ 20. Indem die Innenwand der Stützöffnung geeignet gestaltet wird (also als Vieleck gleicher Art), lässt sich jeweils leicht eine formschlüssige Verbindung herstellen.

Im Rahmen der vorliegenden Erfindung ist allgemein vorgesehen, dass die Führhülse in verschiedenen Positionen in die Stützöffnung eingesetzt werden kann und dass sich eine verschiedene Führung für einen Bolzen abhängig von der Position der Führhülse relativ zur Stützöffnung ergibt.

Dazu ist zweckmäßigerweise vorgesehen, dass der Führeinsatz bezogen auf die Führhülse nicht-zentrisch ist. Eine nicht-zentrische Anordnung der Führöffnung ergibt sich, wenn das Zentrum der Führöffnung gegenüber dem Flächenschwerpunkt der Führhülse verschoben ist. Der Flächenschwerpunkt der Führhülse lässt sich als geometrischer Flächenschwerpunkt ermitteln. Dieser konnte auch als Massenschwerpunkt ermittelt werden, allerdings unter der impliziten Voraussetzung, dass die Führhülse aus einem Material konstanter Dicke gefertigt ist und ohne Berücksichtigung von Ausnehmungen, auch der die Führöffnung selbst. Der Flächenschwerpunkt wird somit von der Kontur der Außenwand des Führeinsatzes bestimmt. Im Zweifel ist allerdings ohnehin unmittelbar aus einfachen geometrischen Überlegungen klar, wo der Flächenschwerpunkt der Führhülse liegt, dies ist insbesondere dann der Fall, wenn die Führhülse als Ring gestaltet wird. Für eine genaue Bestimmung ist allerdings für die Ermittlung des Flächenschwerpunktes der Verlauf der Außenwand der Führhülse heranzuziehen.

Bei diesem Konzept wird also die Grundidee einer formschlüssigen Verbindung zwischen Führhülse und Stützscheibe kombiniert mit der nichtzentrischen Anordnung zumindest der Führöffnung.

Dieses Grundkonzept lässt sich dahingehend weiterführen, dass auch die Stützscheibe in die Aufnahme (in der Regel Aufnahmeöffnung) in verschiedenen Positionen eingesetzt werden kann und die Auswahl der Position einen Einfluss auf die Führung des Bolzens hat. Die Aufnahme für die Stützscheibe wird häufig ein rundes Loch oder Sackloch (meist als Aussparung oder Bohrung) in einem Betonfundament sein. Typisch ist ein Aufnahmeloch in einer Fundamentplatte, häufig einer Fundamentplatte aus Metall, also etwa Eisen, Stahl, Edelstahl oder auch Aluminium. Daher ist eine Ringform für die Außenwand der Stützscheibe zweckmäßig.

Konkret wird der Flächenschwerpunkt der Stützscheibe in den Blick genommen. Dieser soll sich (jedenfalls im Zweifelsfall) wieder aus dem Verlauf der Außenwand der Stützscheibe unter der Annahme einer konstanten Materialdicke und ohne Berücksichtigung der Stützöffnung zur ergeben. Die Stützöffnung der Stützscheibe weist ebenfalls ein Zentrum auf, das sich ähnlich bestimmen lässt. Es ist zweckmäßig, wenn auch das Zentrum der Stützöffnung gegenüber dem Flächenschwerpunkt der Stützscheibe verschoben ist. Je nach Orientierung der Einsetzung der Stützscheibe in die Aufnahme ergibt sich dann relativ zum Zentrum der Aufnahme ein verschobenes Zentrum der Stützöffnung. In dieser Weise ist ein erster Anpassungs- oder Auswahlschritt für die Führung des Bolzens möglich. Der nächste Auswahlschritt ergibt sich dann aus der Orientierung der Führhülse innerhalb der Stützöffnung.

Durch die Kombination der Drehbarkeit eines inneren Elementes und eines äußeren Elementes, also der Stützscheibe und der Führhülse, ist es möglich, über einen Winkelbereich von 360 Grad Abweichungen zwischen der Sollstelle einer Bohrung und der Ist-Position der Bohrung zu korrigieren. Zusätzlich können Abweichungen in radialer Richtung ausgeglichen werden. Es ist nämlich möglich, die Bolzendurchführung der Führhülse innerhalb eines Kreisrings frei zu wählen. Das heißt, die Position kann sowohl im Hinblick auf den Winkel als auch im Hinblick auf die radiale Orientierung angepasst werden. Der Abstand von Innenkreis zu Außenkreis des Kreisrings kann dabei sogar etwa bis zum halben Durchmesser der Aufnahmeöffnung betragen.

Zweckmäßig ist es auch, wenn die Innenwand der Stützöffnung und die Außenwand der Führhülse über einen großen Winkelbereich in Kontakt stehen, insbesondere auch über einen Winkelbereich von mehr als 90 Grad, mehr als 180 Grad (das heißt, über mehr als einen gestreckten Winkel), mehr als 270 Grad oder auch ganze 360 Grad. Traditionelle Führeinsätze verwenden in der Regel ein Langloch. Bei einem solchen Langloch gibt es in den meisten Positionen nur zwei Stützpunkte zwischen Führhülse und umgebendem Element, etwa also zwischen Führhülse und Stützscheibe. Diese beiden Stützpunkte liegen einander gegenüber (beschreiben also einen gestreckten Winkel). In Randpositionen können sich mehrere Stützpunkte ergeben, in der Regel wird aber eine Stützung über einen weiten Winkelbereich nicht erreicht. Gerade die Stützung über einen weiten Winkelbereich erlaubt eine sichere Führung, da in der Regel vorher nicht absehbar ist, aus welcher Richtung eine Stützung besonders wünschenswert ist. Eine Bewegung entlang der ungeschützten Richtung, also etwa entlang der Längsachse eines Langlochs, kann aber der erste Schritt zu einem Versagen einer Stütz- oder Ankerkonstruktion sein.

Allgemein ist es im Rahmen der vorliegenden Erfindung auch von Interesse, einen Führeinsatz für einen Bolzen zur Verfügung zu stellen, welcher eine Führhülse mit einer Führöffnung, die den Bolzen aufnehmen kann, aufweist, und welcher ferner eine Stützscheibe aufweist, die eine Stützöffnung umfasst und die ihrerseits die Führhülse aufnehmen kann, wobei die Führhülse eine Außenwand aufweist und die Stützöffnung eine Innenwand aufweist und die Außenwand der Führhülse in verschiedenen Positionen in die Stützöffnung eingesetzt werden kann und die Innenwand der Stützöffnung und die Außenwand der Führhülse über einen Winkel in Kontakt stehen, der größer ist als ein gestreckter Winkel.

Ebenfalls ist allgemein zweckmäßig, wenn die Aufnahmeöffnung der Führhülse nicht-/ex-zentrisch vorgesehen ist. Ebenso gilt, dass es auch zweckmäßig ist, wenn die Aufnahmeöffnung der Stützscheibe ex-zentrisch ist.

Zweckmäßig ist es, wenn bei der Führhülse ein Kragen vorgesehen ist. Ein solcher Kragen überragt die Stützöffnung, sodass die Führhülse nicht durch die Stützöffnung rutschen kann und nur bis zu einem durch den Kragen bestimmten Punkt in die Stützöffnung eingeführt werden kann.

Nützlich ist, wenn auch die Stützscheibe einen Kragen aufweist. Mit diesem Kragen kann sich die Stützscheibe an der Aufnahmeöffnung abstützen. Der Kragen ist dafür so ausgelegt, dass er die Aufnahmeöffnung überragt.

Sinnvoll ist auch, wenn die Stützscheibe eine Profilierung an der Außenwand aufweist. Mit der Außenwand stützt sich die Stützscheibe zumindest teilweise gegen einen Teil, in der Regel eine Innenwand, der Aufnahmeöffnung ab. Die Profilierung sorgt dafür, dass die Stützscheibe verdrehsicher positioniert werden kann. Zweckmäßig ist eine Verprägung der Außenwand.

Von praktischem Nutzen ist, wenn die Führhülse eine Einfädelschräge aufweist. Eine solche Einfädelschräge wird sinnvollerweise im unteren Bereich der Außenwand der Führhülse vorgesehen. Durch die Schräge hat die Außenwand dort einen verringerten Durchmesser. Diese Einfädelschräge sorgt für ein leichteres Einführen der Führhülse in die Stützöffnung der Stützscheibe.

Es kann auch nützlich sein, den Führeinsatz so zu gestalten, dass eine schräge Führung des Bolzens möglich ist. Unter schräg ist dabei zu verstehen, dass die Hauptachse des Bolzens verschiedene Winkel gegenüber dem Fundament, also beispielsweise einer Fundamentplatte, einnehmen kann. Somit kann diese Hauptachse auch verschiedene Winkel gegenüber der Führhülse und/oder der Stützscheibe einnehmen. Insbesondere ist eine Veränderung des Winkels gegenüber der Außenwand der Stützscheibe möglich.

Zu diesem Zweck kann der Führeinsatz mit einem dritten Bauteil ausgestattet werden, nämlich mit einer Winkelführhülse. Diese Winkelführhülse wird auf die Führhülse aufgesetzt. Sie bietet dann eine Führöffnung an, in die der Bolzen aufgenommen werden kann. Die Führöffnung der Führhülse umgibt den Bolzen dann weniger eng, sodass eine Winkelverstellung des Bolzens innerhalb der Führöffnung möglich ist.

Die Winkelführhülse stützt sich zweckmäßigerweise auf der Führhülse in einer Weise ab, die eine Winkelverstellung gut möglich macht. Beispielsweise kann die Unterseite der Winkelführhülse eine Kegelform haben. Die Oberseite der Führhülse kann eine korrespondierende Form haben, beispielsweise als Kegelpfannenscheibe gestaltet sein.

Im Rahmen der vorliegenden Erfindung kann ein zweiteiliger Führeinsatz, bestehend aus einer Führhülse und einer Stützscheibe angeboten werden, bei der die Führhülse zur Kooperation mit einer Winkelführhülse ausgelegt ist. Zweckmäßig kann es auch sein, einen dreiteiligen Führeinsatz anzubieten, der aus Winkelführhülse, Führhülse und Stützscheibe besteht.

Die vorliegende Erfindung betrifft auch ein Verfahren zur Führung eine Bolzens. Das entsprechende Verfahren soll, vorzugsweise in der Reihenfolge der Aufzählung, folgende Schritte umfassen:
- Zurverfügungstellen eines runden Bolzens mit einer Längsachse und einem Bolzendurchmesser
- Zurverfügungstellen eines Ankerelements mit einer Aufnahme
- Zurverfügungstellen eines Führeinsatzes mit einer Führhülse 12, welcher eine Aufnahmeöffnung 14 aufweist, die einen Aufnahmedurchmesser hat, der größer ist als der Bolzendurchmesser
- Zurverfügungstellen einer Stützscheibe 16, die die Führhülse 12 aufnehmen kann
- Festlegen einer Sollposition für den Bolzen
- Einsetzen der Stützscheibe 16 in die Aufnahme unter Berücksichtigung der Sollposition
- Einsetzen der Führhülse 12 in die Stützscheibe 16 unter Berücksichtigung der Sollposition

Das Ankerelement kann dabei ein beliebiges Element sein, mit dem der Bolzen verbunden werden soll. Zweckmäßig ist auch, wenn die Position des Bolzens durch Entnehmen der Führhülse 12 aus der Stützscheibe 16 und Wiedereinsetzen Führhülse 12 in die Stützscheibe 16 korrigiert oder feinjustiert wird. Nützlich ist ferner, wenn die Stützscheibe 16 durch einen Kragen 18 der Führhülse 12 teilweise bedeckt wird. Ebenfalls nützlich ist wenn das Ankerelement durch einen Kragen 20 der Stützscheibe 16 teilweise bedeckt wird. Der Kragen 20 kann das Eindringen von Feuchtigkeit in die Aufnahme des Ankerelements unterbinden. Besonders bei einer Aufnahme in Form eines Sacklochs ist dies vorteilhaft.

Besonders zweckmäßig ist es, wenn die Dicke des Führeinsatzes auf das entsprechende Ankerelement abgestimmt werden kann. Häufig wird eine Fundamentplatte als Ankerelement verwendet. In diesem Fall ist es günstig, wenn die Dicke des Führeinsatzes an die Dicke der Fundamentplatte angepasst werden kann. Die Fundamentplatte hat eine Oberseite und eine Unterseite und mindestens eine Aufnahme für den Führeinsatz. Der Führeinsatz wird sich in der Regel mit dem Kragen der Stützscheibe auf der Oberseite der Fundamentplatte abstützen. Die Dicke der Stützscheibe, also insbesondere die Höhe ihrer Außenwand, kann zweckmäßigerweise so gewählt sein, dass die Unterseite der Stützscheibe mit der Unterseite der Fundamentplatte abschließt. Die Führhülse wird sich in der Regel mit dem Kragen auf der Stützscheibe abstützen. Auch ihre Dicke wird zweckmäßigerweise so gewählt, dass die Unterseite der Führhülse mit der Unterseite der Fundamentplatte abschließt, insbesondere wird also die Länge der Außenwand der Führhülse entsprechend gewählt.

Das Verfahren ist auf den erfindungsgemäßen Führeinsatz bezogen zu verstehen. Das heißt, Merkmale der Gestaltung des Produktes sind analog auf das Verfahren zu übertragen, und Merkmale des Verfahrens sind analog auf Merkmale des Produktes zu übertragen

Weitere Merkmale, aber auch Vorteile der Erfindung, ergeben sich aus den nachfolgend aufgeführten Zeichnungen und der zugehörigen Beschreibung. In den Abbildungen und in den dazugehörigen Beschreibungen sind Merkmale der Erfindung in Kombination beschrieben. Diese Merkmale können allerdings auch in anderen Kombinationen von einem erfindungsgemäßen Gegenstand umfasst werden. Jedes offenbarte Merkmal ist also auch als in technisch sinnvollen Kombinationen mit anderen Merkmalen offenbart zu betrachten. Die Abbildungen sind teilweise leicht vereinfacht und schematisch.
- Fig. 1: zeigt eine perspektivische Darstellung eines erfindungsgemäßen Führeinsatzes
- Fig. 2: zeigt denselben Führeinsatz in einer Seitenansicht
- Fig. 3: zeigt in einer perspektivischen Darstellung Führhülse und Stützscheibe des Führeinsatzes separat
- Fig. 4: zeigt die Führhülse und die Stützscheibe aus einer anderen Perspektive
- Fig. 5: zeigt Führhülse und Stützscheibe in einer Seitenansicht
- Fig. 6: zeigt in einer schematischen Aufsicht die Konstruktion der Stützscheibe
- Fig. 7: zeigt in einer schematischen Aufsicht die Konstruktion der Führhülse
- Fig. 8: zeigt in einer schematischen Aufsicht eine typische Fundamentplatte und den Einsatz des erfindungsgemäßen Führeinsatzes in einer solchen Fundamentplatte
- Fig. 9: zeigt in einer Schnittansicht den Einsatz der Erfindung zur Verankerung einer Fundamentplatte

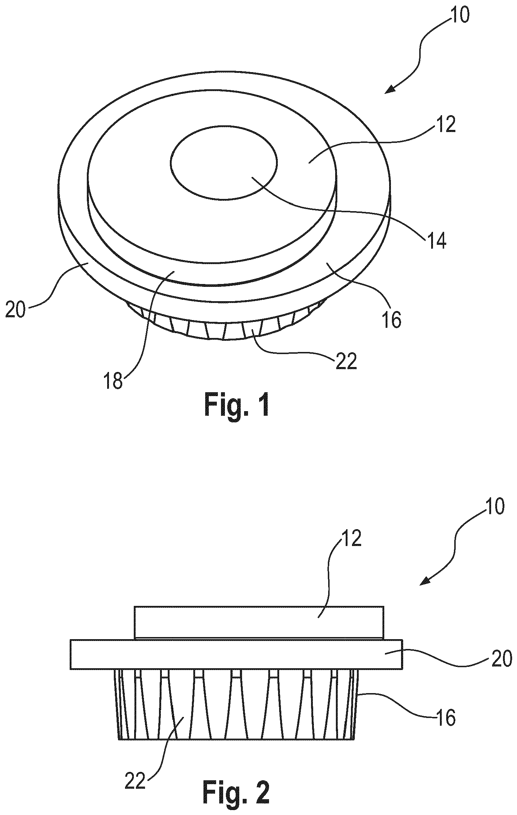

Fig. 1 zeigt in einer perspektivischen Seitenansicht den Führeinsatz 10. Er umfasst die Führhülse 12, die die Führöffnung 14 anbietet. Diese Führöffnung 14 kann einen Bolzen aufnehmen. Die Führhülse 12 ist in die Stützscheibe 16 eingesteckt. Sie stützt sich mit dem Kragen 18 auf der Oberseite der Stützscheibe 16 ab. Die Stützscheibe 16 selbst umfasst ebenfalls einen Kragen 20.

Die Führhülse 12 hat eine im Wesentlichen scheibenförmige Form, insbesondere ist der Kragen 18 kreisförmig ausgebildet.

Die Stützscheibe 16 hat ebenfalls im Wesentlichen eine Ringform, insbesondere ist der Kragen 20 kreisrund ausgebildet. Unterhalb des Kragens 20 erstreckt sich die Außenwand 22 der Stützscheibe 16. Mit dieser Außenwand 22 kann Kontakt zu einer Aufnahmeöffnung hergestellt werden.

Fig. 2 zeigt denselben Führeinsatz 10 in einer Seitenansicht. Die Führhülse 12 stützt sich mit ihrem ringförmigen Kragen auf der Oberseite der Stützscheibe 16 ab. Die Stützscheibe 16 weist den Kragen 20 auf, welcher oberhalb der Außenwand 22 angeordnet ist. Mithilfe des Kragens 20 kann sich die Stützscheibe 16 auf der Oberseite einer Aufnahmeöffnung abstützen. Der Kragen 20 kann zusätzlich einen wasser- und schmutzdichten Abschluss der Aufnahmeöffnung darstellen.

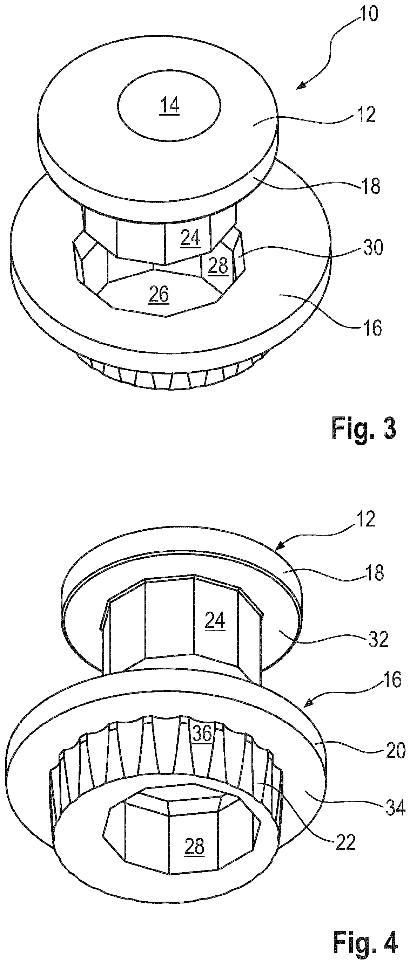

Fig. 3 zeigt den Führeinsatz 10 in einer anderen Konfiguration, nämlich in einer Konfiguration, in der die Führhülse 12 noch nicht in die Stützscheibe 16 eingesetzt ist. Der kreisrunde Verlauf des Kragens 18 der Führhülse 12 lässt gut erkennen, dass die Führöffnung nicht-zentrisch in der Führhülse 12 vorgesehen ist. Der Mittelpunkt der runden Führöffnung 14 ist also versetzt gegenüber dem Mittelpunkt der Führhülse 12, wie sie sich als Mittelpunkt des kreisrunden Kragens 18 ergibt.

Unterhalb des Kragens 18 erstreckt sich die Außenwand 24 der Führhülse 12. Diese Außenwand folgt der Form eines Vielecks. Es sind 12 Seitenflächen vorgesehen.

Die Führhülse 12 kann von der Stützscheibe 16 aufgenommen werden. Die Stützscheibe 16 weist dazu die Stützöffnung 26 auf. Die Stützöffnung 26 wird von der Innenwand 28 umgeben. Die Innenwand 28 hat ebenfalls die Form eines Vielecks mit 12 Flächenabschnitten. Dementsprechend kann die Führhülse 12 in zwölf verschiedenen Positionen von der Stützscheibe 16 aufgenommen werden. In jeder dieser Positionen ergibt sich eine formschlüssige Verbindung, das heißt, die Außenwand 24 der Führhülse 12 liegt an allen korrespondierenden Abschnitten der Innenwand 28 der Stützscheibe 16 an. Je nach Orientierung der Führhülse 12 in der Stützscheibe 16 variiert bei unveränderter Orientierung der Stützscheibe 16 die Position der Führöffnung 14.

Um das Einführen der Führhülse 12 in die Stützöffnung 26 der Stützscheibe 16 zu erleichtern, sind am oberen Ende der Innenwand 28 Einführschrägen 30 vorgesehen.

Fig. 4 zeigt die Teile des Führeinsatzes 10 in einer perspektivischen Ansicht von "unten", soweit "unten" die generelle Richtung der Aufnahmeöffnung relativ zum Führeinsatz bezeichnet. Gut erkennbar ist der runde Kragen 18 der Führhülse 12. Unter dem Kragen ist die Außenwand 24 angeordnet. Der Kragen bietet einen Stützrand 32, mit dem sich die Führhülse 12 auf der Oberseite der Stützscheibe 16 abstützen kann.

Die Stützscheibe 16 ihrerseits weist einen ähnlichen Kragen 20 auf, welcher den Stützrand 34 anbietet, mit dem sich die Stützscheibe 16 auf einem Rand neben einer Aufnahme abnutzen kann. Die Innenwand 28 ist der Form nach auf die Außenwand 24 abgestimmt, weist also in diesem Fall die gleiche Anzahl von Wandabschnitten auf.

Die Außenwand 22 der Stützscheibe 16 weist ein Rauprofil 36 auf. Zweckmäßig ist es allgemein im Rahmen der vorliegenden Erfindung, wenn die Außenwand 22 der Stützscheibe 16 eine leichte Kegelform hat. Durch eine solche Kegelform oder allgemein leichte Schrägstellung der Außenwand ist das Einführen der Stützscheibe in einer Aufnahme, beispielsweise die Öffnung einer Fundamentplatte, einfacher. Mit diesem Rauprofil kann die Außenwand 22 verdrehsicher in eine Aufnahmeöffnung eingeführt werden.

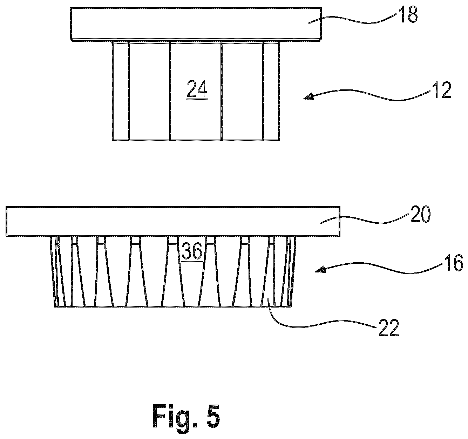

Fig. 5 zeigt die Führhülse 12 und die Stützscheibe 16 in einer Seitenansicht. Hier ist ebenfalls gut erkennbar, dass die Führhülse 12 leicht ex-zentrisch in die Stützscheibe 16 eingeführt werden soll.

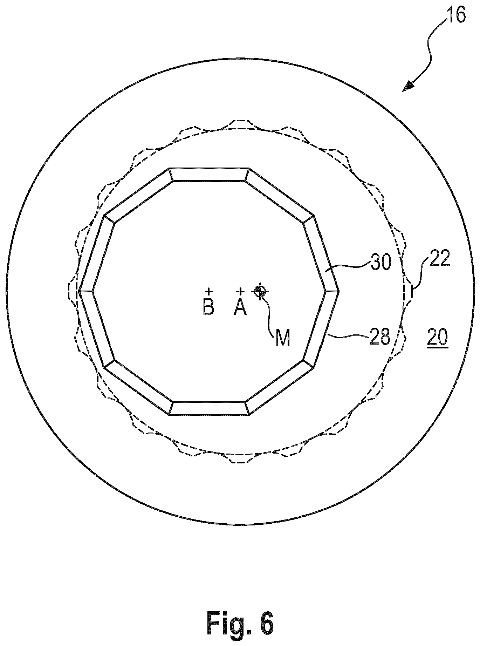

Fig. 6 zeigt in einer schematischen Aufsicht eine Stützscheibe. Sie dient der Erläuterung der Funktionsweise der vorliegenden Erfindung. Man sieht auf den Kragen 20 der Stützscheibe 16. Unter diesem Kragen erstreckt sich die Außenwand 22, mit der sich die Stützscheibe in einer Aufnahme abstützen kann. Die Innenwand 28 der Stützscheibe kann die Führhülse aufnehmen, wobei das Einführen der Führhülse durch die Einfädelschräge 30 erleichtert wird.

In der Skizze ist nun als Punkt A der Mittelpunkt oder genauer Flächenschwerpunkt der Außenwand 22 dargestellt. Dieser entspricht im Wesentlichen dem Mittelpunkt einer Bohrung, die die Außenwand 22 aufnehmen könnte. Ebenfalls dargestellt ist der Punkt B, welcher der Mittelpunkt der Innenwand 28 ist. Die Aufnahme für die Führhülse, welche ja durch die Innenwand 28 gebildet wird, ist also vom Mittelpunkt der Außenwand - und damit vom Mittelpunkt der Aufnahme für den Führeinsatz insgesamt verschoben. Genau dieser Abstand von Punkt A zu Punkt B kann zur Korrektur der Position des Bolzens gegenüber der Position der Aufnahme verwendet werden. Da die Stützscheibe 16 in verschiedenen Positionen in eine Aufnahme eingesetzt werden kann, kann die Orientierung der Strecke von A nach B frei gewählt werden.

Lediglich zur Illustration ist auch der Punkt M dargestellt, welcher der Massenschwerpunkt der Führscheibe ist. Dieser entspricht jedoch nicht dem hier relevanten Flächenschwerpunkt oder Mittelpunkt der Außenwand 22, da hier die Ausnehmung berücksichtigt wurde.

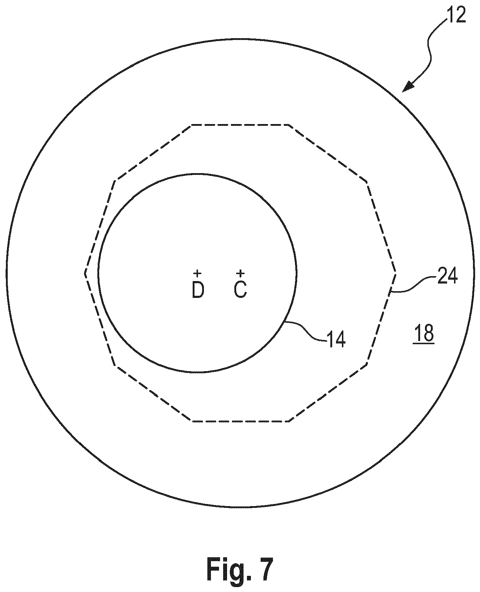

Fig. 7 zeigt in einer entsprechenden schematischen Aufsicht die Führhülse 12. Man sieht auf ihren Kragen 18. Ebenfalls skizziert ist der Verlauf der Außenwand 24 der Führhülse. Diese verläuft entlang eines Vielkants, in diesem Fall entlang eines Zehnecks. Die Form der Außenwand 24 entspricht der schon gezeigten Form der Wand 28 der Stützscheibe 16.

Ebenfalls dargestellt ist die Führöffnung 14, die einen Bolzen aufnehmen kann.

Der eingezeichnete Punkt C ist der Mittelpunkt oder genauer Flächenschwerpunkt der Außenwand 24. Ebenfalls eingezeichnet ist der Mittelpunkt der Führöffnung 14. Wiederum ergibt sich ein Abstand beider Punkte. Dieser Abstand von Punkt C zu Punkt D kann ebenfalls zur Korrektur der Position des Bolzens relativ zur Aufnahme genutzt werden. Im Übrigen ist die Orientierung der Strecke C nach D durch eine verschiedene Orientierung der Führhülse 12 anpassbar. Die Außenwand 24 kann dazu in zehn verschiedenen Positionen in die Innenwand 28 eingesetzt werden.

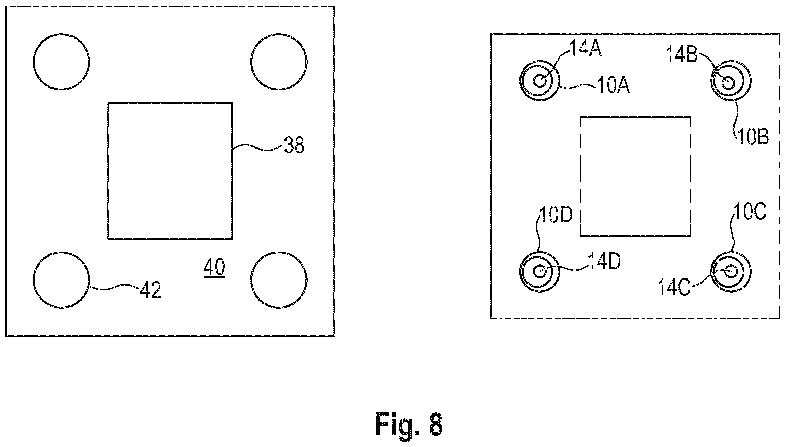

Fig. 8 zeigt schematisch eine typische Anwendungssituation für den Führeinsatz. Verankert werden soll ein Pfosten, dessen Grundfläche 38 schematisch oder auch symbolisch dargestellt ist. Dazu eingesetzt wird die Fundamentplatte 40. Diese Fundamentplatte weist vier Bohrungen auf, welche als kreisrunde Löcher ausgeführt sind und symmetrisch angeordnet. Der Mittelpunkt dieser Löcher könnte dementsprechend durch ein Quadrat verbunden werden.

Daneben ist eine Anwendung erfindungsgemäßer Führeinsätze dargestellt. Für die vier Bohrungen werden die vier Führeinsätze 10A, 10B, 10C und 10D verwendet. Diese erlauben eine Anpassung zwischen der vorgegebenen Position der Bohrungen 42 und der gewünschten Position der Bolzen. Die Bolzen können durch die entsprechenden Führöffnungen aufgenommen werden, also die Führöffnungen 14A, 14B, 14C und 14D.

Wie man erkennen kann, sind die Führöffnungen nicht auf einem perfekten Quadrat angeordnet. Deutlich ist beispielsweise, dass die Führöffnung 14B gegenüber dem Mittelpunkt der entsprechenden Bohrung nach links unten verschoben ist.

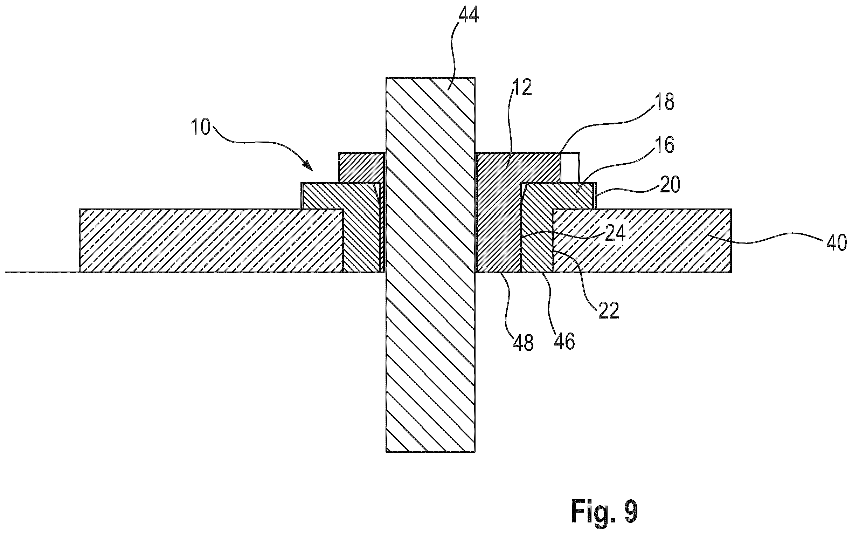

Fig. 9 stellt eine Schnittansicht dar, die die Verwendung eines erfindungsgemäßen Führeinsatzes mit einer Fundamentplatte zeigt. In die Bohrung in der Fundamentplatte ist die Stützscheibe 16 eingesetzt. Sie stützt sich mit dem Kragen 20 an der Oberseite der Fundamentplatte ab. In die Stützscheibe 16 ist die Führhülse 12 eingesetzt, welche sich mit ihrem Kragen 18 auf der Stützscheibe 16 abstützt. Diese Führhülse 12 führt den Bolzen 44. Die Unterseite 46 der Stützscheibe 16 verläuft bündig mit der Unterseite der Platte 40. Ebenso verläuft die Unterseite 48 der Führhülse 12 bündig mit der Unterseite 46 der Stützscheibe 16 und auch mit der Unterseite der Platte 40. In dieser Weise lässt sich eine optimale Führung des Bolzens über die ganze Höhe der Fundamentplatte 40 erreichen.

Insgesamt erkennt man, wie sich in preiswerter Weise eine zweckmäßige und auch für die Massenherstellung geeignete Vorrichtung erzeugen lässt, welche universell verwendbar ist.

### Bezugszeichenliste

- 10: Führeinsatz
- 12: Führhülse
- 14: Führöffnung
- 16: Stützscheibe
- 18: Kragen
- 20: Kragen
- 22: Außenwand
- 24: Außenwand
- 26: Stützöffnung
- 28: Innenwand
- 30: Einfädelschräge
- 32: Stützrand
- 34: Stützrand
- 36: Rauprofil
- 38: Grundfläche Pfosten
- 40: Fundamentplatte
- 42: Bohrung
- 44: Bolzen

## Patentansprüche

1. Führeinsatz (10) für einen Bolzen, welcher eine Führhülse (12) und eine Stützscheibe (16) umfasst, wobei die Führhülse (12) eine Führöffnung (14) umfasst, die den Bolzen aufnehmen kann, und die Stützscheibe (16) ihrerseits eine Stützöffnung (26) umfasst, die die Führhülse (12) aufnehmen kann, und wobei die Führhülse (12) eine Außenwand (24) aufweist, und die Stützöffnung (26) eine Innenwand (28) aufweist, die mit der Außenwand (24) der Führhülse (12) in Kontakt gebracht werden kann, und die Führhülse (12) bezogen auf die Außenwand (24) einen Flächenschwerpunkt hat, **dadurch gekennzeichnet, dass** das Zentrum der Führöffnung (14) gegenüber diesem Flächenschwerpunkt verschoben ist und die Außenwand (24) der Führhülse (12) in verschiedenen Positionen in die Stützöffnung (26) eingesetzt werden kann.

2. Führeinsatz (10) nach dem vorhergehenden Anspruch, bei dem die Stützscheibe (16) eine Außenwand (22) aufweist, mit der Kontakt zu einer Aufnahme hergestellt werden kann, und die Stützscheibe (16), bezogen auf die Außenwand (22), einen Flächenschwerpunkt hat, und das Zentrum der Stützöffnung (26) gegenüber diesem Flächenschwerpunkt verschoben ist.

3. Führeinsatz (10) nach einem der vorhergehenden Ansprüche, bei dem die Innenwand (28) der Stützöffnung (26) und die Außenwand (24) der Führhülse (12) über einen Winkel in Kontakt stehen, der größer ist als ein gestreckter Winkel.

4. Führeinsatz (10) nach einem der vorhergehenden Ansprüche, bei dem die Führöffnung (14) rund ist und/oder die Stützöffnung (26) rund ist.

5. Führeinsatz (10) nach einem der vorhergehenden Ansprüche, bei dem die Stützöffnung (26) die Form eines Vielecks hat.

6. Führeinsatz (10) nach einem der vorhergehenden Ansprüche, bei dem die Außenwand (24) der Stützscheibe (16) profiliert ist.

7. Führeinsatz (10) nach einem der vorhergehenden Ansprüche, bei dem die Innenwand (28) der Stützöffnung (26) eine zur Führhülse (12) hin orientierte Einfädelschräge (30) aufweist.

8. Führeinsatz (10) nach einem der vorhergehenden Ansprüche, bei dem die Stützscheibe (16) einen Kragen (20) aufweist und/oder die Führhülse (12) einen Kragen (18) aufweist.

9. Führeinsatz (10) nach einem der vorhergehenden Ansprüche, bei dem ferner eine Winkelführhülse vorgesehen ist, welche den Bolzen aufnehmen kann und sich auf der Führhülse (12) abstützt, wobei die Winkelführhülse eine Führrichtung für den Bolzen vorgibt und diese Führrichtung gegenüber der Führhülse (12) und/oder der Stützscheibe (16) verstellbar ist.

10. Verfahren zur Führung eines Bolzens, welches folgende Schritte umfasst:
- Zurverfügungstellen eines runden Bolzens mit einer Längsachse und einem Bolzendurchmesser
- Zurverfügungstellen eines Ankerelements mit einer Aufnahme
- Zurverfügungstellen eines Führeinsatzes mit einer Führhülse (12), welcher eine Aufnahmeöffnung (14) aufweist, die einen Aufnahmedurchmesser hat, der größer ist als der Bolzendurchmesser
- Zurverfügungstellen einer Stützscheibe (16), die die Führhülse (12) aufnehmen kann
- Festlegen einer Sollposition für den Bolzen
- Einsetzen der Stützscheibe (16) in die Aufnahme unter Berücksichtigung der Sollposition
- Einsetzen der Führhülse (12) in die Stützscheibe (16) unter Berücksichtigung der Sollposition

11. Verfahren nach dem vorhergehenden Anspruch, bei welchem die Position des Bolzens durch Entnehmen der Führhülse (12) aus der Stützscheibe (16) und Wiedereinsetzen Führhülse (12) in die Stützscheibe (16) korrigiert wird.

12. Verfahren nach Anspruch 11, bei welchem die Stützscheibe (16) durch einen Kragen (18) der Führhülse (12) teilweise bedeckt wird.

13. Verfahren nach Anspruch 11, bei welchem das Ankerelement durch einen Kragen (20) der Stützscheibe (16) teilweise bedeckt wird.

14. Verfahren nach Anspruch 11, bei welchem das Ankerelement eine Fundamentplatte mit einer Oberseite und einer Unterseite ist, welche mindestens eine erste Aufnahmebohrung aufweist, und der Kragen der Stützscheibe (16) auf der Oberseite aufliegt und die Innenwand der Stützscheibe (16) bündig mit der Unterseite der Fundamentplatte abschließt.
